# FASCICULE DE BREVET EUROPEEN

(11) **EP 0 493 729 B1**
(45) Date de publication et mention de la délivrance du brevet: **22.03.1995**
(21) Numéro de dépôt: 91121386.6
(22) Date de dépôt: 12.12.1991
(51) Int. Cl.: B60C 3/06, B60C 9/17, B60C 13/00

(54) **Pneumatique à flancs dissymétriques**
Luftreifen mit asymmetrischen Seitenwänden
Pneumatic tire with asymmetrical sidewalls

(30) Priorité: 04.01.1991 FR 9100099
(43) Date de publication de la demande: 08.07.1992
(73) Titulaire: COMPAGNIE GENERALE DES ETABLISSEMENTS MICHELIN - MICHELIN & CIE, 63040 Clermont-Ferrand Cédex (FR)
(72) Inventeur: Lachamp, Michel, F-63000 Clermont-Ferrand (FR)
(74) Mandataire: Devaux, Edmond-Yves

(56) Documents cités:
- EP-A- 0 012 526
- BE-A- 681 206
- FR-A- 1 444 222
- GB-A- 1 478 660
- US-A- 3 542 108
- US-A- 4 265 289

## Description

L'invention concerne un pneumatique à armature de carcasse radiale comportant une armature de sommet formée d'au moins deux nappes de sommet de fils ou câbles métalliques, généralement en acier et faisant avec la direction circonférentielle un angle au plus égal à 45°.

Lorsqu'un tel pneumatique, monté sur véhicule roule sous très forte dérive, les fils ou câbles de l'armature de sommet sont soumis, côté extérieur du véhicule, à des contraintes de compression qui se traduisent par des ruptures de ces fils ou câbles.

Un moyen simple et usuel de remédier à ce problème est d'augmenter la résistance à la compression des câbles, ce qui se réalise, comme connu, soit par une augmentation de la grosseur des câbles, soit par une augmentation du nombre de fils élémentaires ou de torons. Quelque soit le moyen employé, dès lors qu'il s'agit de câbles métalliques, le moyen est coûteux, d'autant plus que le nouveau câble réalisé est souvent surdimensionné, les impératifs de production ne permettant pas la fabrication d'un type de câble donné pour une seule dimension de pneumatique. En outre, le moyen employé alourdit le pneumatique.

Le brevet français 1 493 020 enseigne de remédier à un certain nombre d'inconvénients du pneumatique radial, tel que la fragilité aux chocs latéraux, l'instabilité relative de la trajectoire en ligne droite à vitesse élevée, la facilité relative de décoincement des bourrelets et de mise en contact des flancs avec le sol en virage à vitesse élevée, en décrivant un pneumatique où les deux flancs ont des structures différentes, l'un des flancs présentant une plus grande rigidité aux poussées latérales que l'autre flanc. Parmi les moyens proposés et pouvant être utilisés le brevet cite l'addition d'un renforcement supplémentaire sous forme d'une surépaisseur de gomme à module d'élasticité élevé.

Ce document ne concerne pas l'amélioration de l'endurance d'une armature de sommet vis-à-vis des contraintes de compression. Afin de remédier audit problème, tout en réduisant le prix de revient au maximum, l'invention propose un pneumatique à armature de carcasse radiale, pourvu d'une armature de sommet formée d'au moins deux nappes de câbles métalliques parallèles entre eux dans chaque nappe et croisés d'une nappe à la suivante en faisant avec la direction circonférentielle un angle au plus égal à 45°, et de deux flancs de structure différente, caractérisé en ce que le flanc situé du côté extérieur du véhicule est rendu plus épais que le flanc situé côté intérieur du véhicule par la présence entre l'armature de carcasse et la gomme d'étanchéité intérieure d'une couche de gomme s'étendant entre le bourrelet et le bord de l'armature de sommet, l'épaisseur de cette couche étant comprise entre 0,35 et 1,0 % de la largeur axiale nominale du pneumatique.

On entend par gomme tout mélange d'élastomère, naturel ou synthétique, avec des charges renforçantes, noires ou blanches, et les additifs connus et normalement utilisés dans l'industrie du caoutchouc vulcanisé. Ce mélange peut être aussi chargé de fibres de faible longueur.

Il faut entendre par largeur axiale nominale d'un pneumatique la largeur axiale théorique telle qu'inscrite sur les flancs du pneumatique : la largeur axiale nominale d'un 185/65 R 15 X est 185 mm (premier chiffre de la dimension).

L'utilisation d'un train complet de tels pneumatiques sur un véhicule de tourisme entraîne par ailleurs et de manière inattendue et surprenante un avantage indéniable en confort et plus particulièrement la réduction du bourdonnement de caisse. Le bourdonnement de caisse est défini comme un bruit basse fréquence perçu à l'intérieur du véhicule roulant sur un sol à forte granularité, la fréquence étant comprise approximativement entre 20 Hz et 800 Hz. Dans le cas de fréquence basse, ce bourdonnement correspond à un bruit audible gênant. Dans le cas où la plage des fréquences est plus étendue, la gêne est alors moindre.

Cette couche de gomme, dans le cas d'une épaisseur faible, inférieure ou égale à 1,5 mm présente une épaisseur constante sur une grande partie du flanc, par exemple entre le point de l'armature de carcasse, situé à une distance radiale de l'axe de rotation du pneumatique égale à la distance du point correspondant à l'extrémité du retournement de ladite armature de carcasse audit axe, et l'extrémité de la nappe de sommet la plus proche radialement de l'armature de carcasse.

Mais la couche de gomme peut aussi présenter une épaisseur variable, telle qu'elle soit maximale au niveau de la largeur axiale maximale du pneumatique pour décroître ensuite de part et d'autre jusqu'à une valeur négligeable au niveau de la tringle et sous l'extrémité de l'armature de sommet.

Bien qu'il soit possible d'utiliser pour cette couche intermédiaire des gommes dont les propriétés physiques sont variables, il est préférable, en vue de ne pas augmenter la résistance au roulement, d'utiliser une gomme dont le module sécant d'extension à 10 % d'allongement, est compris entre 2 et 25 MPa, et dont la perte hystérétique à 60°C est comprise entre 8 et 15 %.

L'invention sera mieux comprise à l'aide de la description d'un mode de réalisation non limitatif et illustré par le dessin annexé, comportant une seule figure et, représentant le côté extérieur d'un pneumatique conforme à l'invention, vue en section méridienne.

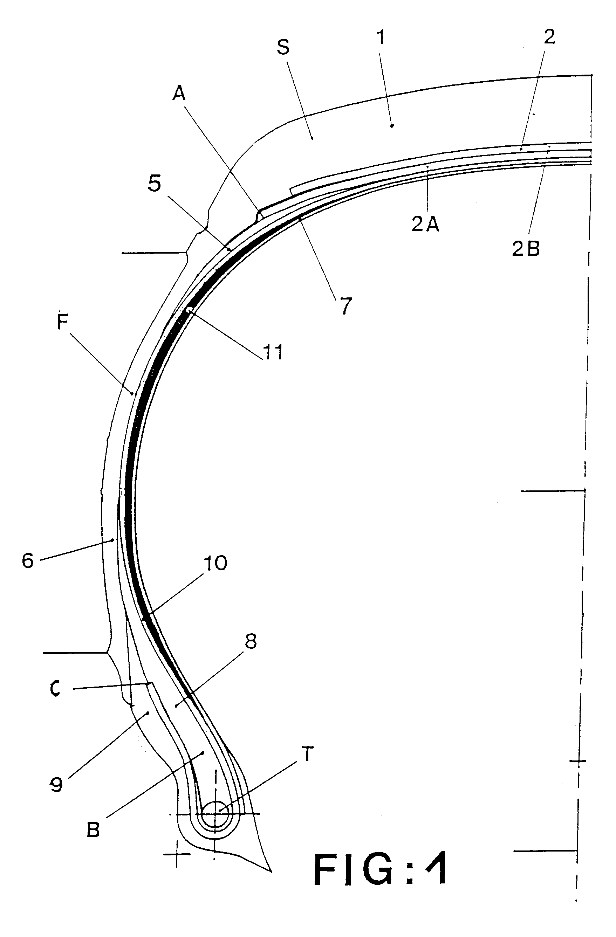

Le pneumatique 145/80.13 de la figure 1 comprend un sommet (S) composé d'une bande de roulement (1) surmontant une armature de sommet (2) de deux nappes de sommet (2A), 2B) de câbles métalliques formant avec la direction circonférentielle un angle de 22°.

Il comprend aussi un bourrelet (B) pourvu d'une tringle (T) autour de laquelle vient s'enrouler l'armature de carcasse (10). Ladite armature (10) et son retournement sont séparés par un bourrage (8), tandis qu'axialement à l'extérieur du retournement est disposé le protecteur (9).

Entre le sommet (S) et le bourrelet (B) se trouve le flanc (F) avec une gomme de flanc extérieur (6) recouvrant l'armature de carcasse (10), celle-ci étant séparée de l'extrémité de l'armature de sommet par une gomme lenticulaire (5).

Axialement à l'intérieur de l'armature de carcasse (10) est disposée la gomme d'épaississement (11) d'épaisseur 1,50 mm, constante de l'extrémité (A) de la nappe de sommet radialement la plus proche de l'armature de carcasse à un point (C) situé à une distance radiale de l'axe de rotation du pneumatique égale à la distance séparant l'extrémité du retournement de l'armature de carcasse (10) dudit axe.

Cette gomme (11) est de composition et qualité voisines de celles de la gomme de calandrage des câblés de l'armature de carcasse radiale (10) et présente un module d'extension à 10 % d'allongement, de 5 MPa et une perte à 60°C égale à 12 %, le module étant le rapport de la force nécessaire pour donner à une éprouvette donnée un allongement de 10 % sur le produit de la section de l'éprouvette par l'allongement ; et la perte, mesurée à une température de 60°C, étant le rapport de l'énergie emmagasinée sur l'énergie fournie à cette éprouvette.

Quant à la gomme d'étanchéité intérieure (7) elle recouvre en pratique entièrement la face interne du pneumatique.

L'appréciation de la résistance des nappes de sommet à la rupture de leurs câblés se fait à l'aide d'un roulage sur volant sous très forte dérive, de manière à ce que lesdits câbles travaillent en compression.

Quant à l'appréciation du confort acousto-vibratoire et du bourdonnement de caisse en particulier, elle peut se réaliser sur un véhicule équipé et par mesure des puissances et des fréquences acoustiques captées par deux microphones placés au niveau des appuis tête.

Si l'on affecte de l'indice 100 la performance d'un pneumatique témoin respectivement dans les deux tests, le pneumatique conforme à l'invention présente un gain de 10 % sur le nombre de décibels émis et de 25 % sur le kilométrage effectué sur volant pour un nombre de ruptures des câbles 6 fils de 23/100 d'épaisseur non frettés de l'armature de sommet, sensiblement égal au nombre de ruptures constatées sur le pneumatique témoin à flancs symétriques.

## Revendications

1. Pneumatique à armature de carcasse radiale (10) s'enroulant autour d'une tringle (T) dans chaque bourrelet (B), pourvu d'une armature de sommet (2) formée d'au moins deux nappes (2A, 2B) de câbles métalliques parallèles entre eux dans chaque nappe et croisées d'une nappe (2A) à la suivante (2B) en faisant avec la direction circonférentielle un angle au plus égal à 45° et de deux flancs (F) de structure différente, caractérisé en ce que le flanc (F), qui sera situé d'un côté extérieur au véhicule, est plus épais que le flanc (F) qui sera situé du côté intérieur au véhicule, du fait de la présence entre l'armature de carcasse (10) et la gomme intérieure d'étanchéité (7) d'une couche de gomme (11) s'étendant entre le bourrelet (B) et le bord de l'armature de sommet (2), l'épaisseur de cette couche (11) étant comprise entre 0,35 et 1 % de la largeur axiale nominale du pneumatique.

2. Pneumatique selon la revendication 1, caractérisé en ce que la couche de gomme (11) présente une épaisseur constante au plus égale à 1,5 mm.

3. Pneumatique selon la revendication 1, caractérisé en ce que la couche (11) a une épaisseur maximale au niveau de la largeur axiale maximale du pneumatique et qui décroît de part et d'autre pour devenir négligeable au niveau du bourrelet et au niveau du bord de l'armature de sommet (2).

4. Equipement d'un véhicule de tourisme, en vue de diminuer le bourdonnement de caisse, caractérisé en ce qu'il se compose de quatre pneumatiques identiques, conformes à l'une des revendications 1 à 3, les flancs épaissis étant tous situés du côté extérieur du véhicule.

## Claims

1. A tyre with radial carcass reinforcement (10) wound around a bead wire (T) in each bead (B), provided with a crown reinforcement (2) formed by at least two plies (2A, 2B) of metal cables which are parallel to each other in each ply and are crossed from one ply (2A) to the next, forming an angle of at most 45° with the circumferential direction, and with two sidewalls (F) of different structures, characterized in that the sidewall (F) which will be located on the outer side of the vehicle is thicker than the sidewall (F) which will be located on the inner side of the vehicle owing to the presence between the carcass reinforcement (10) and the inner hermetic rubber (7) of a layer of rubber (11) extending between the bead (B) and the edge of the crown reinforcement (2), the thickness of this layer (11) being between 0.35 and 1% of the nominal axial width of the tyre.

2. A tyre according to Claim 1, characterized in that the layer of rubber (11) has a constant thickness of at most 1.5 mm.

3. A tyre according to Claim 1, characterized in that the layer (11) has a maximum thickness at the level of the maximum axial width of the tyre, which decreases on either side to become negligible at the level of the bead and at the level of the edge of the crown reinforcement (2).

4. Equipment for a tourist vehicle, in order to reduce the bodywork hum, characterised in that it is comprised of four identical tyres, in accordance with one of Claims 1 to 3, the thickened sidewalls all being located on the outer side of the vehicle.

## Patentansprüche

1. Luftreifen mit einer Radialkarkasse (10), die um einen Wulstkern (T) in jedem Wulst (B) herumgelegt ist, einer Scheitelbewehrung (2) aus mindestens zwei Lagen (2A, 2B) aus Metallseilen, die in jeder Lage zueinander parallel und von einer Lage (2A) zur anschließenden Lage (2B) gekreuzt verlaufen und mit der Umfangsrichtung einen Winkel von höchstens 45° bilden, und zwei Seitenwänden (F) unterschiedlichen Aufbaus,
**dadurch gekennzeichnet**,
daß die Seitenwand (F), die am Fahrzeug außen liegen soll, dicker ist als die Seitenwand (F), die am Fahrzeug innen liegen soll, da zwischen der Radialkarkasse (10) und dem inneren Abdichtgummi (7) eine Gummischicht (11) vorgesehen ist, die sich zwischen dem Wulst (B) und dem Rand der Scheitelbewehrung (2) erstreckt, wobei die Dicke dieser Gummischicht (11) 0,35 bis 1 % der axialen Nennbreite des Luftreifens beträgt.

2. Luftreifen nach Anspruch 1,
dadurch gekennzeichnet, daß die Gummischicht (11) eine
gleichbleibende Dicke von höchstens 1,5 mm aufweist.

3. Luftreifen nach Anspruch 1,
dadurch gekennzeichnet, daß die Dicke der Gummischicht (11) auf Höhe der maximalen axialen Breite des Luftreifens am größten ist und von dort in beiden Richtungen abnimmt und auf Höhe des Wulstes und auf Höhe der Scheitelbewehrung (2) verwindend klein wird.

4. Ausrüstung eines Personenwagens zur Verringerung des Karosseriedröhnens,
dadurch gekennzeichnet, daß sie aus vier gleichen Luftreifen nach einem der Ansprüche 1 bis 3 besteht, wobei sich die verdickten Seitenwände sämtlich auf der Außenseite des Fahrzeugs befinden.
